# EUROPÄISCHE PATENTSCHRIFT

(11) **EP 0 804 724 B1**
(45) Veröffentlichungstag und Bekanntmachung des Hinweises auf die Patenterteilung: **05.08.1998**
(21) Anmeldenummer: 96900558.6
(22) Anmeldetag: 04.01.1996
(51) Int. Cl.: G01N 22/04, G01N 27/04, G01N 33/24, G01R 27/06

(54) **FEUCHTESENSOR FÜR AUSGEDEHNTE SCHICHTEN**
MOISTURE SENSOR FOR EXTENDED LAYERS
DETECTEUR D'HUMIDITE POUR COUCHES DILATEES

(30) Priorität: 17.01.1995 DE 19501196
(43) Veröffentlichungstag der Anmeldung: 05.11.1997
(73) Patentinhaber: Forschungszentrum Karlsruhe GmbH, 76133 Karlsruhe (DE)
(72) Erfinder: SCHUHMANN, Rainer, D-76149 Karlsruhe (DE); BRANDELIK, Alexander, D-76227 Karlsruhe (DE); HÜBNER, Christof, D-68535 Edingen-Neckarhausen (DE)
(74) Vertreter: Rückert, Friedrich, Dr.
(86) Internationale Anmeldenummer: EP9600010
(87) Internationale Veröffentlichungsnummer: WO9622522

(56) Entgegenhaltungen:
- DE-C- 4 326 361
- US-A- 4 341 112
- US-A- 5 155 356
- US-A- 5 376 888

## Beschreibung

Die Erfindung betrifft einen Feuchtesensor für ausgedehnte Schichten.

Mülldeponien sind mit tonmineralischen Schichten gegen Durchwaschen von Regen abgedichtet. Diese Schichtdichtungen, sowohl die Basisabdichtung unten wie die Abdeckungsabdichtung oben, sollen durch ihre Plastizität der Verformung des ganzen Müllberges folgen und die Wasserundurchlässigkeit für viele Jahrzehnte gewährleisten. Durch nicht mehr kontrollierbare Scherkräfte kann diese Dichtschicht reißen. Außerdem führt ein kleiner Feuchtigkeitsverlust (ca. 4 - 5 %) dieser hochverdichteten und nahezu gesättigten mineralischen Schutzschicht zum Versagen der Fähigkeit zur Wasserisolation. Große umwelttechnische und wirtschaftliche Bedeutung hat deshalb die frühzeitige Erkennung und kleinräumige Lokalisierung einer eventuell durch Rißbildung oder Austrocknung beschädigten Stelle. Die heute übliche Kontrolle mittels Sickerwasserbrunnen signalisiert den Schaden zu spät und erlaubt nicht die Ortung der beschädigten Stellen. Eine immer wiederholbare ortsaufgelöste Messung der Feuchtigkeit und Kompaktheit der Dichtschicht wird gefordert, ist aber bis heute noch nicht realisiert.

In der Landwirtschaft und Gärtnerei hängt die optimale Bewässerung von der großflächigen aber ortsaufgelösten Messung der Bodenfeuchte ab. Eine zu geringe Wassermenge führt zur Schädigung der Pflanzen, während eine zu starke Bewässerung ein Auswaschen der Nährstoffe und eine Versalzung verursacht.

In großen Getreidelagern ist die Überwachung der Feuchtigkeit des Lagergutes in dem ganzen Volumen des Lagers notwendig. Von der Oberfläche gewonnene Proben oder Messungen reichen nicht aus.

Meteorologische Modelle erfordern eine genaue Kenntnis des Wassergehalts im Boden, da der Energieaustausch zwischen Boden und Atmosphäre vorwiegend durch Verdampfung und Kondensation von Wasser erfolgt. Besonders die oberflächennahen Schichten sind daran beteiligt.

In der Regel werden zur Feuchtebestimmung Sonden benutzt, die den Dielektrizitätskoeffizienten DK des zu untersuchenden Gemisches messen. Daraus läßt sich mit Hilfe von Kalibriermessungen die Feuchte ermitteln. Ein eingeführtes Verfahren ist die Zeitbereichs-Reflektionsmessung, die in der Fachliteratur meist unter der englischen Übersetzung "Time-Domain-Reflectometry" oder abgekürzt "TDR-Methode" erscheint. Sie beruht auf der Ausbreitung elektromagnetischer Wellen entlang von Leitungen. Die elektrischen Eigenschaften von Leitungen und somit die Eigenschaften der Signalübertragung werden u.a. durch die charakteristische Impedanz, die Dämpfung und die Ausbreitungsgeschwindigkeit beschrieben. Diese Größen hängen bekannterweise von dem (eventuell verlustbehafteten) Dielektrikum des Raumes ab, über den sich das elektrische Feld erstreckt. Dieser Raum ist bei koaxialen Leitungen durch die äußere Abschirmung begrenzt. In offenen Leitungssystemen wie der Doppelleitung (Lecher-Leitung), der Drei- oder Mehrfachleitung und der Oberflächenwellenleitung (z. B. nach Goubau) dringt das Feld jedoch über die nächste Umgebung der Leiter hinaus. Eine dortige Änderung der Materialeigenschaften ändert die obigen Übertragungseigenschaften.

Die Time Domain Reflectometry (TDR) zur Wassergehaltsmessung in Böden ist aus der Zeitschrift Wasser + Boden bekannt (R. Rook, S. Melchior, G. Miehlich, "Die Time Domain Reflectometry (TDR) für die Wassergehaltsmessung in Böden", Wasser + Boden , Nr. 4, 1993). Die dort vorgestellte Sonde beruht u.a. auf dem von Davis et. al. eingeführten Sensor (J. L. Davis, A. P. Annan, "Electromagnetic Detection of Soil Moisture", Canadian Journal of Remote Sensing, Band 3, Nr. 1, 1977a).

Nachteilig bei diesem Sensor ist die kurze Meßstrecke der als offene Leitung gestalteten Meßgabel. Allgemein werden TDR-Sonden nur in Längen von einigen 10 Zentimetern gefertigt und angeboten. Nachteilig ist auch, daß unterschiedliche Schichten entlang des Stabes ihre Wirkung ausgleichen können. Mehrfachreflexionen können sich gegenseitig aufheben. Auch die relativ hohe elektrische Leitfähigkeit begrenzt die Verwendbarkeit auf einige Zentimeter aufgrund der großen Leitungsdämpfung. Ein weiterer Nachteil ist, daß sich die Gabel beim Einstecken in das Gemisch aufspreizen kann. Die daraus folgende Impedanzerhöhung täuscht einen trockeneren Zustand als in Wirklichkeit vor. Der Dielektrizitätskoeffizient des Wassers degradiert bei Frequenzen oberhalb 1 GHz stark. Diese Degradation ist von vielen Faktoren zusätzlich beeinflußt. Um eine genaue Zuordnung DK zu Feuchtegehalt zu erreichen, muß die Meßfrequenz (folglich die Anstiegssteilheit eines Meßpulses) auf unter 1 GHz begrenzt werden. Die heute bekannten TDR-Sonden nehmen diese Begrenzung bedauerlicherweise nicht vor.

Die Aufgabe der Erfindung ist einen Sensor der e. g. Art so auszugestalten, daß er eine möglichst große Fläche bei hoher Ortsauflösung erfaßt.

Gelöst wird diese Aufgabe durch die Merkmale des Patentanspruchs 1.

Die Unteransprüche beschreiben vorteilhafte Ausgestaltungen des Sensors.

Vorteilhaft ist die Verwendung von Doppel leitungen mit durchgehendem oder unterbrochenem Steg, der die konstante Kabel impedanz gewährleistet und bewirkt, daß nur ein Teil des eletrischen Feldes in das zu messende Material hinausreicht.

Die Erfindung wird im folgenden anhand eines Beispiels mit Hilfe der Figuren näher erläutert.

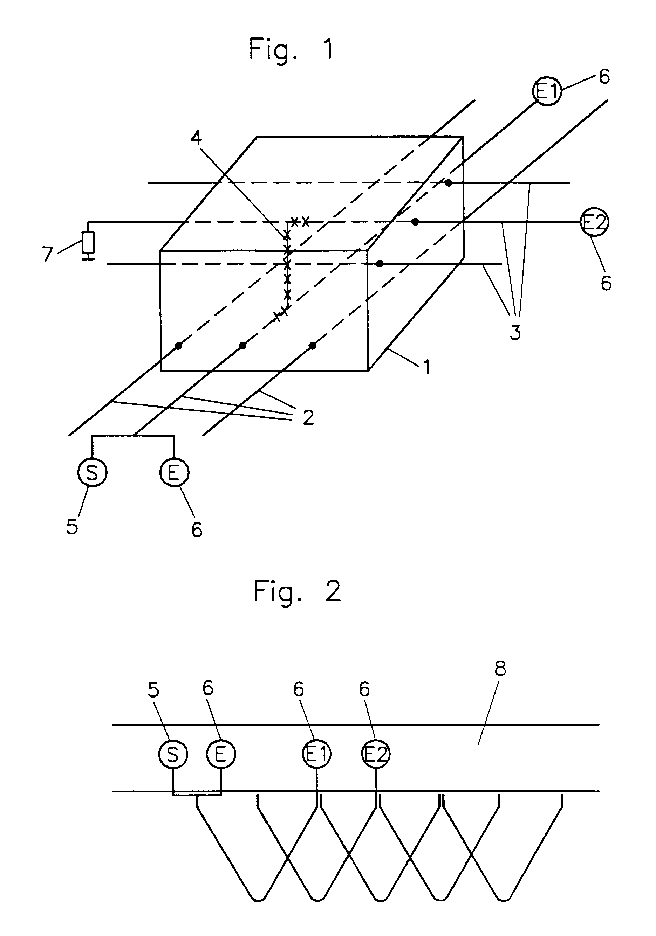

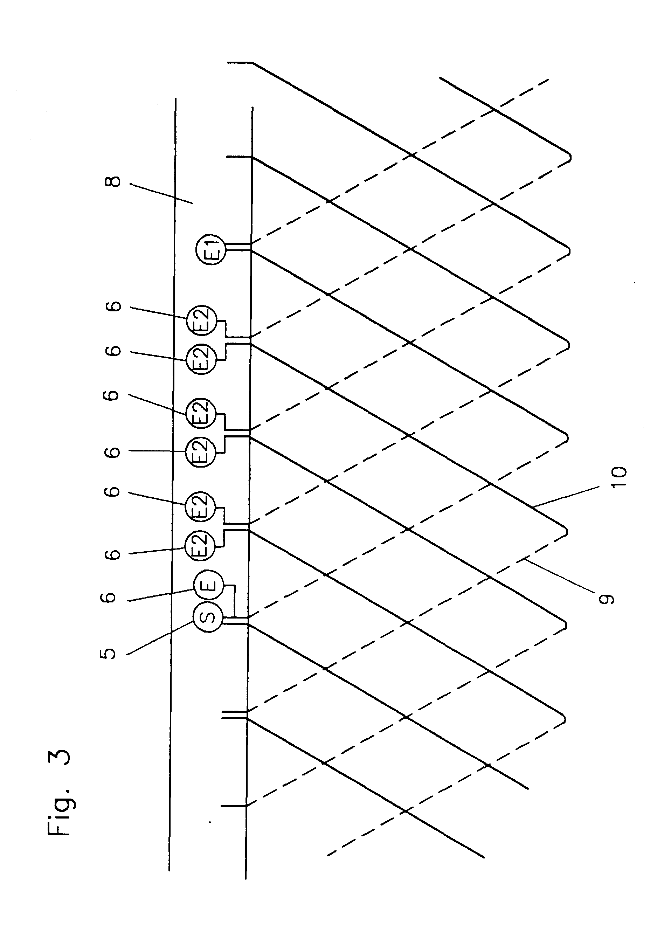

Die Fig 1 zeigt einen Ausschnitt einer Messanordnung im Bereich der Kreuzung mehrerer Leitungen und die Fig. 2 und 3 zeigen beispielhaft Anordnungen mit mehreren sich kreuzenden Leitungssystemen.

Die Figur 1 zeigt einen Ausschnitt 1 von einer Materialschicht, deren Feuchtigkeitsänderung und Kompaktheit gemessen wird. In einer unteren Ebene sind Meßleitungen 2, vorteilhaft Doppelleitungen, gelegt. Eine Materialschicht trennt diese Leitungen 2 von den Leitungen 3, die in eine andere Richtung ausgelegt sind. Die Leitungen 2 und die Leitungen 3 berühren sich in den Kreuzungspunkten nicht, wobei jede der unabhängigen Leitungen eine zwei- oder mehradrige Band- bzw Stegleitung mit jeweils bekannter und konstanter Wellenimpedanz ist und wobei die unabhängigen Leitungen im Kreuzungsbereich nur so weit von einander entfernt sind, daß ein Signalübersprechen im Kreuzungsbereich der unabhängigen Leitungen stattfinden kann. Das Übersprechen zwischen zwei Leitungen in dem Bereich 4 einer Kreuzung (mit kleinen Kreuzchen dargestellt) wird dadurch gesteigert, daß der Kreuzungswinkel von 90° abweicht. Bei groben Rissen wird die Leitung brechen. Eine erste Messung prüft die Leitung 2 auf Unterbrechung mittels einer Reflektionsmessung, die mit einem Signalgenerator 5 und dem dazu synchronisierten Empfänger E 6 durchgeführt wird. Diese Messung kann auch mit einem Reflektometer durchgeführt werdne. Die Stelle eines eventuellen Risses berechnet sich aus dem Zeitverhalten der Reflektion. Die zweite Messung stellt fest, ob eine Impedanzänderung entlang einer Leitung 2 aufgetreten ist. Dies kann entweder durch eine Laufzeitmessung zwischen Generator 5 und Empfänger E1 6 oder durch eine Impedanzmessung mittels eines Reflektometers, bestehend aus Generator 5 und Empfänger E 6 vorgenommen werden. An einer trockenen Stelle wird die Laufzeit kürzer und die Impedanz höher. Wenn sich die Impedanz entlang der Leitung 2 mehrmals ändert, dann schaltet man den Empfänger E2 an eine kreuzende Leitung 3 und mißt erneut. Das Übersprechen ermöglicht den Empfang an einer der Leitungen 3. Das Umschalten des Empfängers E2 6 an Leitungen 3, die näher zum Signalgenerator liegen, trennt die eventuellen Stellen ab, die mehrmalige Impedanzänderungen an der Leitung 2 verursacht haben. Die Bestimmung der Änderung der DK erfolgt durch Laufzeit- und Impedanzmessung. Damit wird die Meßgenauigkeit gesteigert. Durch Permutation der Stellen des Signalgenerators 5 und des Emfängers E 6 kann jede beliebige Strecke des Netzsystems, bestehend aus den Leitungen 2 und Leitungen 3, die in eine andere Richtung laufen, gemessen werden. Der Signalgenerator 5 ist aus dem vorhin erwähnten Grund in seiner Frequenz auf 1 GHz beschränkt. Eine Meßleitung 3 wird an beiden Enden mit der erwarteten Leitungsimpedanz 7 abgeschlossen.

Ein besonderer Vorteil dieses Meßnetzes liegt in dem sehr niedrigen Preis des verlegten Kabels (ca. DM 0,1 pro m), wodurch eine permanente großflächige Beobachtung wirtschaftlich ermöglicht wird.

Fig. 2 zeigt ein System aus 5 unabhängigen Leitungen, von denen jede höchstens zwei andere Leitungen kreuzt, wobei von einem einzigen Serviceweg 8 alle Anschlußstellen für den Generator 5 und Empfänger E erreichbar sind.

Bei der Anordnung von Fig. 3 weisen die einzelnen Leitungen wesentlich mehr Kreuzungspunkte mit benachbarten Leitungen auf. Außerdem liegen die gestrichelt dargestellten Teile 9 einer jeden Leitung tiefer als die durchgezogen dargestellten Teile 10. Dadurch wird die Tiefenauflösung in der gesamten Schicht erhöht, da die beiden Leitungshälften 9, 10 jeweils eine Teilschicht im Bereich der Eindringtiefe des Feldes erfassen können. Eine eventuelle Schadensstelle die z. B. zwischen dem Sender 5 und dem Empfänger E1 liegt kann durch den Wechsel des Empfängers E2 in die eingezeichneten Positionen an den diese Leitung kreuzenden Leitungen feiner lokalisiert werden. Diese Auflösung kann durch eine Anordnung mit noch mehr Kreuzungspunkten zwischen den einzelnen Leitungen weiter verfeinert werden.

Die Leitungen können auch so verlegt werden, daß mehr als zwei Teilschichten erfaßbar sind, indem mehrere Leitungsebenen über einander angeordnet werden.

Die realisierten Messungen wurden mit zwei verschiedenen Leitungstypen durchgeführt. Bandleitung mit 240 Ω Impedanz: Dieses Kabel wurde früher für Fernsehantennenzuleitungen verwendet. Im nassem Boden zeigte es eine Dämpfung von 0,6 dB/m, eine Laufzeitänderung von 90 % und eine Impedanzänderung von 97 % gegenüber Luft. Stegleitung mit 440 Ω Impedanz: Dieses Kabel zeigte in dem selben nassen Boden eine Dämpfung von 0,4 dB/m, eine Laufzeitänderung von 120% und eine Impedanzänderung von 160% gegenüber Luft. Die Übersprechdämpfung für das erste Kabel lag bei -26 dB und für das zweite Kabel bei nur -20 dB. Diese Daten zeigen, daß eine Strecke mit einmaligem Übersprechen ca. 70 m betragen darf.

## Patentansprüche

1. Feuchtesensor für ausgedehnte Schichten bestehend aus mindestens zwei sich kreuzenden einander nicht berührenden unabhängigen Leitungen, wobei die Leitungen im Kreuzungsbereich nur soweit voneinander entfernt sind, daß ein Signalübersprechen im Kreuzungsbereich stattfinden kann, aus jeweils mindestens einem hochfrequenten elektrischen Signalgenerator mit einem Signallaufzeitmeßgerät, zur Impedanzmessung an den sich kreuzenden Leitungen und einem Reflektometer zur Laufzeit- und Impendanzmessungen an einzelnen unabhängigen Leitungen.

2. Feuchtesensor nach Anspruch 1, der dadurch gekennzeichnet ist, daß die unabhängigen einzelnen Leitungen des Leitungssystem zweiadrige Leitungen nach Lecher sind.

3. Feuchtesensor nach Anspruch 1 oder 2, dadurch gekennzeichnet, daß eine Leitung des Leitungssystems mit mehreren unabhängigen Leitungen des Leitungssystems jeweils einen Kreuzungsbereich aufweist, wobei die Abstände der Kreuzungsbereiche von einander bekannt sind.

4. Feuchtesensor nach einem der Ansprüche 1 bis 3, dadurch gekennzeichnet, daß die Leitungen des Leitungssystems eine zu messende Schicht netzartig durchweben.

5. Feuchtesensor nach einem der Ansprüche 1 bis 4, dadurch gekennzeichnet, daß alle durch Übersprechen angeregten Leitungen des Leitungssystems an beiden Enden mit angepaßten Abschlüssen versehen sind.

## Claims

1. Moisture sensor for extended layers, comprising at least two intersecting, non-touching, independent wires, wherein the wires, in the intersection region, are only so far apart from one another that a signal crosstalk can take place in the intersection region, respectively at least one high-frequency electrical signal generator with a signal transit time measuring apparatus, for measuring the impedance at the intersecting wires, and a reflectometer for measuring the transit time and impedance at individual independent wires.

2. Moisture sensor according to claim 1, which is characterised in that the independent individual wires of the wiring system are two-cored Lecher wires.

3. Moisture sensor according to claim 1 or 2, characterised in that each wire of the wiring system has an intersection region with a plurality of independent wires of the wiring system, the spacings between the intersection regions being known.

4. Moisture sensor according to one of claims 1 to 3, characterised in that the wires of the wiring system weave through a layer to be measured in a net-like manner.

5. Moisture sensor according to one of claims 1 to 4, characterised in that all of the wires of the wiring system, which are excited by crosstalk, are provided at both ends with adapted terminations.

## Revendications

1. Détecteur d'humidité pour des couches dilatées,
caractérisé en ce qu'
il consiste en au moins deux lignes qui se croisent sans se toucher, les lignes étant dans la zone de croisement écartées seulement l'une de l'autre, pour que puisse avoir lieu une diaphonie de signaux dans la zone de croisement, en respectivement au moins un générateur de signaux électriques à haute fréquence avec un appareil de mesure du temps de parcours des signaux, qui sert à mesurer l'impédance sur les lignes qui se croisent et un réflectomètre qui sert à mesurer le temps de parcours et l'impédance sur les différentes lignes indépendantes.

2. Détecteur d'humidité selon la revendication 1,
caractérisé en ce que
les différentes lignes indépendantes du système de lignes sont des lignes à deux brins selon Lecher.

3. Détecteur d'humidité selon la revendication 1 ou 2,
caractérisé en ce qu'
une ligne du système de lignes à plusieurs lignes indépendantes présente respectivement une zone de croisement, les distances entre les points de croisement les uns par apport aux autres étant connues.

4. Détecteur d'humidité selon la revendication 1 à 3,
caractérisé en ce que
les lignes du système de lignes quadrillent une couche à mesurer à la manière d'un réseau.

5. Détecteur d'humidité selon l'une des revendications 1 à 4,
caractérisé en ce que
toutes les lignes du système de lignes excitées par diaphonie sont pourvues aux deux extrémités de terminaisons adaptées.
